**Europäisches Patentamt**

**European Patent Office**

**Office européen des brevets**

(19)

(11) **EP 0 805 423 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.⁷: **G07D 5/08**

(21) Anmeldenummer: **96107303.8**

(22) Anmeldetag: **09.05.1996**

(54) **Einrichtung zur Prüfung der Echtheit von Münzen, Jetons oder anderen flachen metallischen Gegenständen**

Device for checking the validity of coins, tokens or other flat metallic objects

Dispositif pour déterminer la validité de pièces de monnaie, jetons ou autres objets plats métalliques

(84) Benannte Vertragsstaaten:
**AT BE CH DE DK ES FI FR GB GR IE IT LI LU MC NL PT SE**

(30) Priorität: **03.04.1996 CH 86996**

(43) Veröffentlichungstag der Anmeldung:
**05.11.1997 Patentblatt 1997/45**

(73) Patentinhaber: **IPM International SA**
**1211 Genève 16 (CH)**

(72) Erfinder:
• **Seitz, Thomas**
**1202 Genève (CH)**

• **Rueff, Joseph**
**1205 Genève (CH)**

(74) Vertreter: **Wenger, Joel-Théophile**
**Leman Consulting S.A.**
**62 route de Clementy**
**1260 Nyon (CH)**

(56) Entgegenhaltungen:
**EP-A- 0 704 825**     **GB-A- 2 069 211**
**GB-A- 2 287 341**     **US-A- 4 086 527**

**Beschreibung**

Die Erfindung bezieht sich auf eine Einrichtung zur Prüfung der Echtheit von Münzen, Jetons oder anderen flachen metallischen Gegenständen der im Oberbegriff des Anspruchs 1 genannten Art (siehe z.B. GB-A-2 287 341).

Solche Einrichtungen eignen sich beispielsweise als Kassierstationen in öffentlichen Telefonstationen, Verkaufsautomaten, Zählern von Energie etc.

Eine Einrichtung zur Prüfung der Echtheit von Münzen der im Oberbegriff des Anspruchs 1 genannten Art ist bekannt aus der DE 24 55 112. Die Einrichtung weist ein induktives Messelement auf, das mit zwei verschiedenen Frequenzen $f_1$ und $f_2$ beaufschlagt wird, da es Münzen gibt, die ein leicht messbares und von anderen Münzen unterscheidbares Messsignal liefern, wenn die Frequenz $f_1$ vergleichsweise tief ist, während es auch Münzen gibt, die nicht bei dieser tiefen Frequenz $f_1$, sondern bei einer höheren Frequenz $f_2$ leicht von anderen Münzen unterscheidbar sind. Das Messelement besteht aus einem induktiven Sender und einem induktiven Empfänger, welche auf gegenüberliegenden Seiten eines Münzkanals angeordnet sind. Der Sender umfasst einen Kern, der von zwei Spulen umwickelt ist. Die Spulen werden unabhängig voneinander bei verschiedenen Frequenzen erregt, so dass im Münzkanal ein wechselförmiges Magnetfeld mit zwei verschiedenen Frequenzen schwingt. Dem ebenfalls als Spule ausgebildeten Empfänger sind Filter nachgeschaltet, um die Amplituden der bei den beiden Frequenzen im Empfänger induzierten Signale zu messen. Ein solche Einrichtung stellt eine mechanisch und elektrisch aufwendige Konstruktion dar.

Aus der europäischen Patentanmeldung EP 704 825 (Stand der Technik nach Artikel 54(3)(4) EPÜ) ist eine Einrichtung zur Prüfung der Echtheit von Münzen bekannt, bei der eine in einem Serieresonanzkreis angeordnete Spule als induktives Messelement zur Bestimmung der Legierungszusammensetzung oder der Dicke der Münze dient.

Der Erfindung liegt die Aufgabe zugrunde, eine Einrichtung zur Prüfung der Echtheit von Münzen zu schaffen, bei der mit einem einfachen induktiven Messelement ein hohes Selektionsvermögen zwischen verschiedenen Münzen erreichbar ist.

Die genannte Aufgabe wird erfindungsgemäss gelöst durch die Merkmale des Anspruches 1.

Die Erfindung schlägt eine Einrichtung mit einem induktiven Messelement vor, bei der die Münze einem wechselförmigen Magnetfeld mit wenigstens zwei Frequenzen ausgesetzt wird. Das Messelement weist eine einzige Spule auf, die aus zwei Quellen mit Strömen oder Spannungen unterschiedlicher Frequenz gespeist wird: Die Spule ist gleichzeitig Teil von zwei verschiedenen Stromkreisen. In wenigstens einem Stromkreis dient die Phasenverschiebung zwischen dem von der Quelle gelieferten Strom und der über der Spule liegenden Spannung als Messsignal. Zur Erhöhung der Empfindlichkeit der Messung der Phasenverschiebung ist im entsprechenden Stromkreis ein Kondensator vorgesehen, mit dem der Nullpunkt der Phasenverschiebung, d.h. der Wert bei Abwesenheit der Münze, auf einen festen Wert einstellbar ist.

Nachfolgend werden Ausführungsbeispiele der Erfindung anhand der Zeichnung näher erläutert, wobei unter dem Begriff der Münze M im folgenden auch Jetons oder andere flache metallische Gegenstände zu verstehen sind.

Es zeigen:

Fig. 1    einen Münzkanal einer Prüfeinrichtung mit induktiven Messelementen,

Fig. 2    den Münzkanal mit einem weiteren induktiven Messelement

Fig. 3    eine erste elektronische Schaltung zum Betrieb der induktiven Messelemente und

Fig. 4    eine zweite elektronische Schaltung zum Betrieb der induktiven Messelemente.

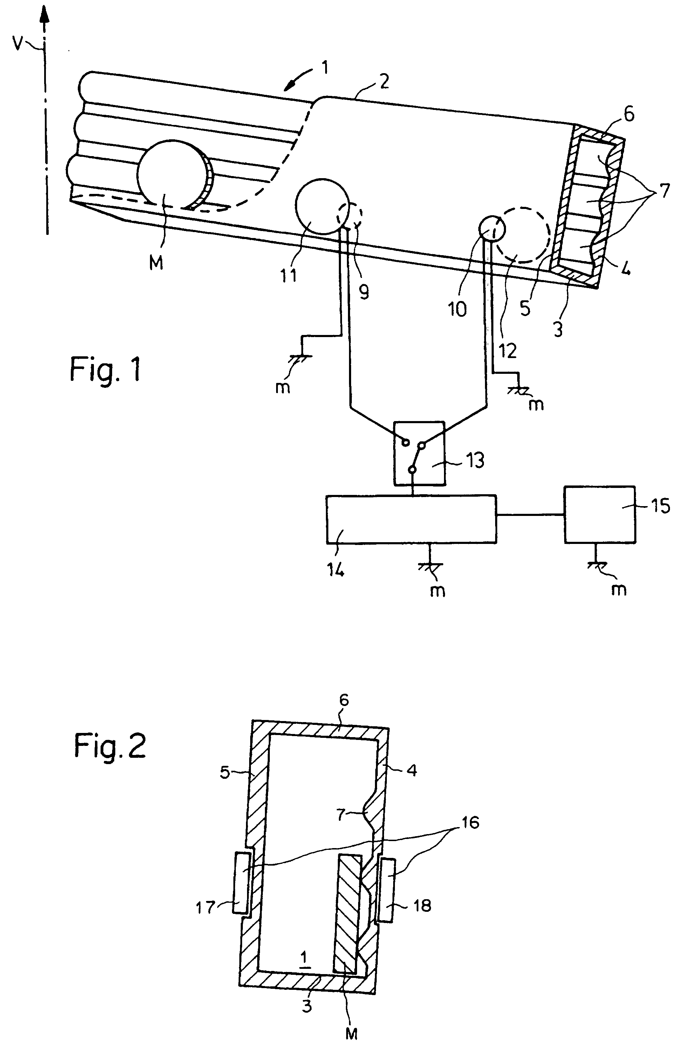

Die Fig. 1 zeigt eine Einrichtung zur Prüfung der Echtheit von Münzen, Jetons oder anderen metallischen Gegenständen mit einem Münzkanal 1, der bevorzugt als Ausnehmung in einem Körper 2 aus zwei Kunststoffteilen ausgebildet ist. Der Münzkanal 1 wird begrenzt durch den Boden 3, eine untere und eine obere Seitenwand 4 bzw. 5 und eine Decke 6. Die untere Seitenwand 4 ist mit angeformten Rippen 7 versehen, die in Laufrichtung der Münze M ausgebildet sind. Der Münzkanal 1 ist in Laufrichtung einer zu prüfenden Münze M geneigt und die beiden Seitenwände 4 und 5 sind gegenüber der Vertikalen V um einen spitzen Winkel von typischerweise 12° geneigt, so dass die zu prüfende Münze M auf dem Boden 3 entlang des Münzkanals 1 hinabrollt oder hinabgleitet und dabei mit einer Seitenfläche auf den Rippen 7 der unteren Seitenwand 4 idealerweise flach aufliegt. Die Seitenwände 4 und 5 weisen je auf der dem Münzkanal 1 abgewandten Seite nicht dargestellte Ausnehmungen zur Aufnahme von versetzt angeordneten Spulen 9 bzw. 10 und, fakultativ, metallischen Plättchen 11, 12 auf. Die Spule 9 und das Plättchen 12 befinden sich an der unteren Seitenwand 4, weshalb sie gestrichelt gezeichnet sind. Die Plättchen 11 und 12 sind den Spulen 9 bzw. 10 gegenüberliegend angebracht. Sie sind vorzugsweise rund oder viereckig, können aber auch eine beliebige andere geometrische Form aufweisen. Je eine Spule 9, 10 und gegebenenfalls das in der gegenüberliegenden Seitenwand 5 oder 4 angeordnete metallische Plättchen 11 bzw. 12 bilden ein induktives Messelement. Die beiden Spulen 9 und 10 weisen zwei Anschlüsse auf, von denen jeweils einer auf einen gemeinsamen elektrischen Masseanschluss m, der andere auf einen Schalter 13 geführt ist, so dass sie für einen elektrisch voneinander unabhängigen Betrieb mit einer elektronischen Schaltung 14 verbindbar sind. Die Einrichtung enthält weiter eine Steuer- und Auswerteeinheit 15 beispielsweise in Gestalt eines Mikroprozessors zur Auswertung des von der elektronischen Schaltung 14 gelieferten Ausgangssignals und zur Steuerung der Einrichtung. Die Schaltung 14 und der Mikroprozessor 15 sind dahingehend ausgebildet, aus den mit den Spulen 9 und 10 gemessenen Signalen diskrete Werte abzuleiten, die von der Legierung bzw. der Dicke d der Münze M abhängen. Die Münze M wird nur dann als echt betrachtet und von der Prüfeinrichtung angenommen, falls diese Werte innerhalb vorgegebener Toleranzen mit vorbestimmten Werten übereinstimmen, andernfalls wird sie zurückgewiesen.

Der Mikroprozessor 15 steuert den Schalter 13, so dass die beim Durchgang der Münze M in den Spulen 9 und 10 zeitlich nacheinander anfallenden Signale mit einer einzigen elektronischen Schaltung 14 gemessen werden können. Anstelle des Schalters 13 und der für beide Spulen 9 und 10 gemeinsamen Schaltung 14 kann jedoch auch für jede der Spulen 9 und 10 eine eigene Schaltung 14 vorgesehen sein, so dass die Arbeitsbedingungen für beide Spulen 9 und 10 getrennt und optimal wählbar sind.

Die Spule 9 befindet sich an der unteren Seitenwand 4, an der sich die Münze M aufliegend entlangbewegt, so dass der Abstand zwischen der Spule 9 und der Seitenfläche der Münze M fest vorgegeben ist und z.B. 1.1 mm beträgt. Die Münze M ist materialmässig entweder aus einer einzigen Legierung oder aus mehreren Legierungen gefertigt. Der bei Anwesenheit der Münze M gemessene Innenwiderstand $R_9$ der Spule 9 hängt bei geeigneter Wahl der Frequenz f des durch die Spule 9 fliessenden Stromes annähernd ausschliesslich vom Material der Münze M ab.

Der Abstand zwischen der Spule 10 und der Münze M ist abhängig von deren Dicke d. Bei der Spule 10 hängt der Innenwiderstand $R_{10}$ somit nicht nur vom Material der Münze M ab, sondern auch von deren Dikke d. Falls die Legierung der Münze M bekannt ist, ist die Dicke d der Münze M eindeutig bestimmbar.

Um einen Einfluss des Durchmessers der Münze M auf die Messungen der Dicke d und der Legierungszusammensetzung zu vermeiden, ist der Durchmesser der Spulen 9 und 10 kleiner als der Durchmesser der kleinsten zu messenden Münze M gewählt und ist die Spule auf der Seitenwand 4 oder 5 des Münzkanals 1 in einer entsprechenden Höhe angeordnet, so dass also die kleinste zu prüfende Münze M die Spule während des Durchganges kurzzeitig vollständig abdeckt. Der Durchmesser der Spule beträgt z.B. 11 mm. Der Widerstand der Zuleitungsdrähte ist vergleichsweise gering. Als Spulen 9, 10 eignen sich besonders gewickelte Spulen mit einem Ferritkern.

Anstelle der Einzelspulen 9 und 10, mit oder ohne gegenüberliegendes metallisches Plättchen 11 bzw. 12, kann auch, wie in der Fig. 2 gezeigt, eine einzige Doppelspule 16 als induktives Messelement dienen. Die Doppelspule 16 besteht aus zwei beidseitig des Münzkanals 1 angeordneten Einzelspulen 17 und 18, die in gegenläufigem Sinn gewickelt und elektrisch in Reihe geschaltet sind, damit das von ihnen erzeugte Magnetfeld innerhalb des Münzkanals 1 im wesentlichen parallel zu den Seitenwänden 4 und 5 ist.

Die Spulen 9 und 10 (Fig. 1), mit oder ohne gegenüberliegendes metallisches Plättchen 11 bzw. 12, wie auch die Doppelspule 16 (Fig. 2) stellen je ein induktives Messelement dar. Beim Durchgang der Münze M ändern sich die elektrischen Eigenschaften des induktiven Messelementes infolge der physikalischen Wechselwirkungen zwischen der entsprechenden Spule 9, 10 bzw. 16 und der Münze M vorübergehend. Das induktive Messelement wird von der elektronischen Schaltung 14 betrieben und stellt für diese eine elektrische Impedanz $Z_S$ dar. Im folgenden wird für die entsprechende Spule 9, 10 bzw. 16 des induktiven Messelementes das Bezugszeichen S verwendet.

Die Spule S ist elektrisch charakterisierbar durch eine Induktivität $L_S$ und einen ohmschen Innenwiderstand $R_S$. Ihre Impedanz beträgt deshalb $Z_S = i \cdot 2 \cdot \pi \cdot f \cdot L_S + R_S$, wobei i die imaginäre Einheit und f die Frequenz bezeichnen. Der Innenwiderstand $R_S$ enthält einen statischen Anteil $R_{S,DC}$ und einen dynamischen Anteil $R_{S,AC}(f)$, der von der Frequenz f des durch die Spule S fliessenden Stromes, von den physikalischen Eigenschaften der Münze M, von der Geometrie der Spule S, von den gegebenenfalls vorhandenen metallischen Plättchen 11, 12 (Fig. 1) und, bei einem induktiven Messelement mit Einzelspulen (9; 10) insbesondere, vom Abstand zwischen der Einzelspule (9; 10) und der Münze M abhängt. Sobald die Münze M beim Rollen entlang des Münzkanals 1 in den Messbereich der Spule S gelangt, nimmt ihr Innenwiderstand $R_S$ zu.

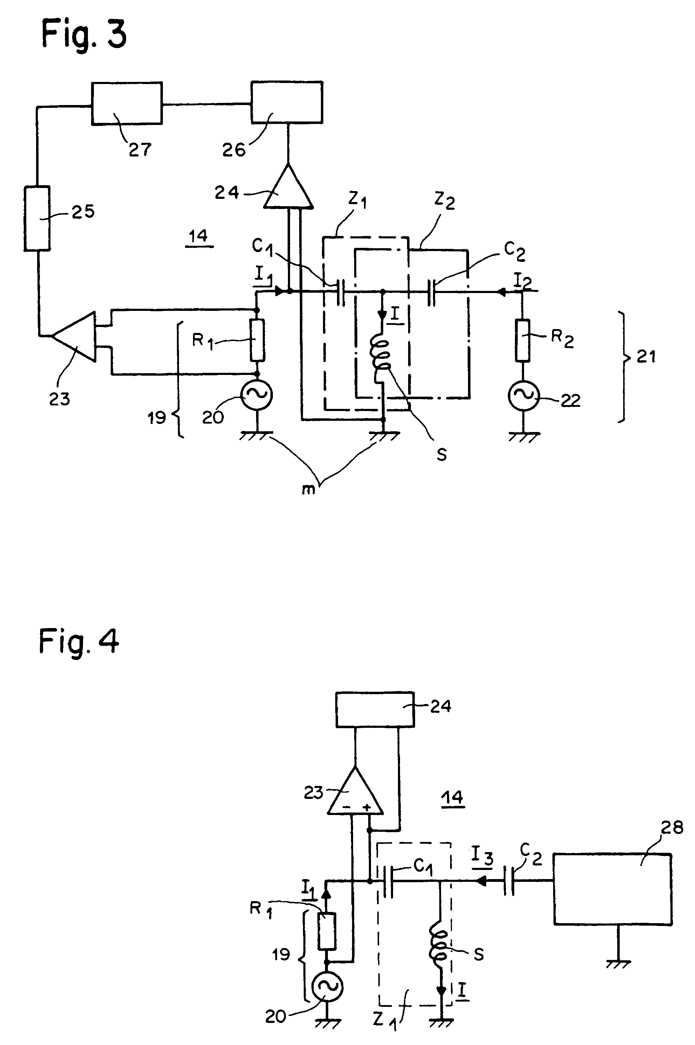

Die Fig. 3 zeigt ein erstes Ausführungsbeispiel der elektronischen Schaltung 14. Der erste Anschluss der Spule S ist mit der Masse m verbunden, der zweite Anschluss der Spule S ist über ein erstes kapazitives Element in Gestalt eines Kondensators $C_1$ an eine erste Stromquelle 19 angeschlossen, die einen Wechselstrom $I_1$ mit annähernd konstanter Amplitude und mit der Frequenz $f_1$ liefert. Die Stromquelle 19 ist gebildet aus einer ersten Wechselspannungsquelle 20 und einem ersten Widerstand $R_1$, der im Vergleich zum Betrag der Impedanz $Z_S$ der Spule S hochohmig ist. Ein Anschluss der Stromquelle 19 ist mit der Masse m verbunden.

Der zweite Anschluss der Spule S ist weiter über einen zweiten Kondensator $C_2$ mit einer zweiten Stromquelle 21 verbunden, die einen Wechselstrom $I_2$ mit annähernd konstanter Amplitude und mit der Frequenz $f_2$ liefert. Die zweite Stromquelle 21 ist gebildet aus einer Wechselspannungsquelle 22 und einem zweiten Widerstand $R_2$, der im Vergleich zum Betrag der Impedanz $Z_S$ der Spule S ebenfalls hochohmig ist. Ein Anschluss der Stromquelle 21 ist ebenfalls mit der Masse m verbunden.

Der Innenwiderstand der Stromquellen 19 bzw. 21 ist so hochohmig bemessen, dass der von der Stromquelle 19 erzeugte Strom $I_1$ hauptsächlich durch die Spule S und nicht durch die Stromquelle 21 fliesst und umgekehrt. Durch die Spule S fliesst somit annähernd der Gesamtstrom $I = I_1 + I_2$.

Die Induktivität $L_S$ der Spule S beträgt typisch 0.5 - 2 mH. Bei einer Frequenz des erregenden Stromes im Bereich von etwa 5 bis 100 kHz liegt ihr Innenwiderstand $R_{S,AC}$ etwa bei 20-250 $\Omega$, bei höheren Frequenzen im Bereich von etwa 1 MHz beträgt ihr Innenwiderstand $R_{S,AC}$ einige k$\Omega$. Bei einer ersten Ausführung erzeugt die Wechselspannungsquelle 20 eine Spannung mit einer Frequenz $f_1$ von etwa 1 - 10 kHz und die Wechselspannungsquelle 22 erzeugt eine Spannung mit einer Frequenz $f_2$ von etwa 50 - 200 kHz. Bei einer zweiten Ausführung liegen die Frequenzen $f_1$ und $f_2$ bei etwa 50 - 200 kHz bzw. 1 MHz. Die Frequenz $f_2$ ist etwa ein bis zwei Grössenordnungen grösser als die Frequenz $f_1$.

Die Spule S stellt die komplexe Impedanz $Z_S$ dar, d.h. der durch die Spule S fliessende Strom $I_1$ und die über der Spule S liegende Spannung, die aufgrund des Stromes $I_1$ in der Spule S induziert wird, weisen eine Phasenverschiebung $\varphi_1$ auf, die gegeben ist durch $\varphi_1 = \arctan\dfrac{2\pi f_1 L_S}{R}$. Solange der Zähler gross ist gegenüber dem Nenner und beim Durchgang der Münze M gross bleibt, ist die Phasenverschiebung $\varphi_1$ beim Durchgang der Münze M kaum messbar. Mit Hilfe des für den Strom $I_1$ in Reihe zur Spule S geschalteten Kondensators $C_1$ ist es jedoch möglich, eine aus der Spule S und dem Kondensator $C_1$ bestehende Impedanz $Z_1$ zu bilden, bei der die Phasenverschiebung $\varphi_1$ zwischen dem durch die Impedanz $Z_1$ fliessenden Strom $I_1$ und der über der Impedanz $Z_1$ liegenden Spannung leicht messbar ist.

Wegen der Beziehung

$$\phi_1 = \arctan\frac{2\pi f_1 L_S - \dfrac{1}{2\pi f_1 C_1}}{R_S}$$

ist der Nullpunkt $\phi_{1,0}$, d.h. der Wert der Phasenverschiebung $\phi_1$ bei Abwesenheit von Münzen M oder bei Anwesenheit einer Münze M einer vorbestimmten Münzsorte, über den Wert des Kondensators $C_1$ beliebig einstellbar. Der Wert $C_1$ ist beispielsweise so gewählt, dass der Nullpunkt $\phi_{1,0}$ 45° beträgt, da die Arkustangensfunktion bei 45° die grösste Steilheit aufweist. Der Nullpunkt $\phi_{1,0}$ kann jedoch auch den Wert 0° oder einen beliebigen anderen Wert aufweisen.

Zur Messung der Phasenverschiebung $\phi_1$ wird der durch die Impedanz $Z_1$ fliessende Strom $I_1$ beispielsweise mittels eines Operationsverstärkers 23, dessen zwei Eingänge mit den beiden Anschlüssen des Widerstandes $R_1$ verbunden sind, in eine Spannung $U_{R1}$ transformiert. Die Spannung $U_{Z1}$ über der Impedanz $Z_1$ wird mittels eines weiteren Operationsverstärkers 24 abgegriffen. Die Spannungen $U_{R1}$ und $U_{Z1}$ an den Ausgängen der Operationsverstärker 23 bzw. 24 sind über ein Filter 25 bzw. 26 einem Phasenmesser 27 zugeführt, der als Ausgangssignal ein der Phasenverschiebung $\phi_1$ proportionales Signal abgibt. Die Filter 25 und 26 sind so bemessen, dass Spannungssignale mit der Frequenz $f_1$ durchgelassen werden, während Signale mit der Frequenz $f_2$ ausgefiltert werden. Die Messung der Phasenverschiebung $\phi_1$ kann auch auf andere Art erfolgen.

Die Spule S und der Kondensator $C_2$ bilden eine zweite Impedanz $Z_2$. Die Phasenverschiebung $\phi_2$ zwischen dem Strom $I_2$ und der über der Impedanz $Z_2$ liegenden Spannung $U_{Z2}$ ist auf analoge Art messbar, wobei der Übersichtlichkeit der Zeichnung wegen auf die Darstellung der entsprechenden elektronischen Elemente wie Verstärker und Phasenmesser verzichtet wurde. Die Frequenz $f_1$ liegt vorzugsweise im Bereich von 1 bis 10 kHz, die Frequenz $f_2$ im Bereich von 50 bis 200 kHz. Die Frequenz $f_2$ kann jedoch auch Werte annehmen, die bis in den MHz-Bereich reichen.

Mit dieser Schaltung 14 sind somit für jede Münze M die durch die Münze induzierten Phasenverschiebungen $\phi_1$ und $\phi_2$ messbar. Als weitere die Münze M charakterisierende Grössen können bei Bedarf die Beträge der Impedanzen $Z_1$ und $Z_2$ bestimmt werden.

Die kapazitiven Elemente $C_1$, $C_2$ dienen zur Senkung des Imaginärteils der Impedanzen $Z_1$ bzw. $Z_2$ auf jeweils einen Wert, bei dem eine durch die Münze M verursachte Änderung mit grosser Genauigkeit messbar ist. Die Beträge der Impedanzen $Z_1$, $Z_2$ sind deshalb kleiner als der Betrag der Impedanz $Z_S$ der Spule S allein.

Die Fig. 4 zeigt ein zweites Ausführungsbeispiel der elektronischen Schaltung 14. Die Stromquelle 21 ist ersetzt durch eine als Spannungsquelle wirkende Schaltung 28, die einerseits den aus der Spule S und dem Kondensator $C_2$ gebildeten Serieresonanzkreis immer in Resonanz bei der Resonanzfrequenz $f_2 = f_R$ hält und andererseits den Serieresonanzkreis mit einer Spannung mit einer vorbestimmten festen Amplitude erregt, so dass der durch den Serieresonanzkreis fliessende Strom $I_3$ proportional zum Innenwiderstand $R_{S,AC}$ ($f_R$) ist. Da der Serieresonanzkreis in Resonanz ist, ist die für den Strom $I_3$ wirksame Impedanz des Serieresonanzkreises ohmisch. Eine solche Schaltung 28 und die Auswertung des von ihr gelieferten Signals sind beschrieben in der europäischen Patentanmeldung EP 704 825. Das Ausgangssignal der Schaltung 28 ist proportional zum Strom $I_3$ und damit zum ohmschen Innenwiderstand $R_{S,AC}(f_R)$, der sich beim Durchgang der Münze M ändert. Der Strom $I_3$ dient somit auch als Kriterium über die Annahme oder Zurückweisung der Münze M.

Mit dieser zweiten elektronischen Schaltung 14 sind insgesamt vier für die Münze M charakteristische Werte messbar, nämlich die Phasenverschiebung $\phi_1$, der Betrag der Impedanz $Z_1$, der ohmsche Innenwiderstand $R_{S,AC}(f_R)$ der Spule S und die Resonanzfrequenz $f_R$, oder davon abgeleitete Werte. Die kapazitiven Elemente $C_1$ und $C_2$ sind mit Vorteil so bemessen, dass

der Strom $I_1$ eine tiefe Frequenz $f_1$ von einigen kHz aufweist und dass die Resonanzfrequenz $f_R$ um ein bis zwei Grössenordnungen grösser als die Frequenz $f_1$ ist.

Damit der durch die Spule S und den Kondensator $C_2$ gebildete Serieresonanzkreis durch den die Stromquelle 19 enthaltenden Stromkreis nicht bedämpft wird, ist es erforderlich, dass die Stromquelle 19 im Vergleich zur Spule S hochohmig ist.

Falls als induktives Messelement die Doppelspule 16 (Fig. 2) verwendet wird, ist die auf der unteren Seitenwand 4 angeordnete Einzelspule 17 mit Vorteil aus im Vergleich zu einem normalen Draht niederohmigem Litzedraht gewickelt, damit ihr Innenwiderstand $R_{S,AC}$ möglichst gering ist.

Beiden Ausführungsbeispielen ist gemeinsam, dass einerseits die Spule S mit einem kapazitiven Element in Reihe geschaltet ist, mit dem sie gemeinsam eine elektrische Impedanz bildet, die mit einem ersten Strom aus einer Stromquelle gespeist ist, und dass die Phasenverschiebung zwischen dem ersten Strom und der Spannung über der Impedanz als Kriterium für die Annahme oder Zurückweisung der Münze dient. Andererseits ist die Spule S zusätzlich mit einem zweiten Strom aus einer zweiten Stromoder Spannungsquelle beaufschlagt zur Messung weiterer Parameter der Münze. Die Messung der Phasenverschiebung und der weiteren Parameter erfolgt dabei nahezu unabhängig voneinander.

**Patentansprüche**

1. Einrichtung zur Prüfung der Echtheit von Münzen (M), Jetons oder anderen flachen metallischen Gegenständen, die ein induktives Messelement mit einer Spule (S; 9; 10; 11; 12; 16) zur Charakterisierung der Münze (M) aufweist, wobei die Spule (S; 9; 10; 16) mit einem ersten Strom ($I_1$) einer ersten Frequenz ($f_1$) aus einer ersten Strom- oder Spannungsquelle (19) der Einrichtung speisbar ist, wobei zwischen die Spule (S; 9; 10; 16) und die erste Strom- oder Spannungsquelle (19) ein kapazitives Element ($C_1$) geschaltet ist, die Spule (S; 9; 10; 16) und das kapazitive Element ($C_1$) eine Impedanz ($Z_1$) bilden und die Phasenverschiebung ($\Phi_1$) zwischen dem ersten Strom ($I_1$) und der Spannung über der Impedanz ($Z_1$) als Kriterium zur Annahme oder Zurückweisung der Münze dient,

   **dadurch gekennzeichnet,**

   **dass** zur Messung weiterer Parameter ($\Phi_2$, $f_R$, $R_{S,AC}(f_R)$) die Spule (S; 9; 10; 16) mit einem zweiten Strom ($I_2$; $I_3$) einer zweiten, höheren Frequenz ($f_2$) aus einer zweiten Strom- oder Spannungsquelle (21; 28) der Einrichtung speisbar ist.

2. Einrichtung nach Anspruch 1, **dadurch gekennzeichnet, dass** das kapazitive Element ($C_1$) so bemessen ist, dass die Phasenverschiebung $\phi$ bei Abwesenheit von Münzen oder bei Anwesenheit einer Münze einer vorbestimmten Münzsorte einen vorbestimmten Wert aufweist.

3. Einrichtung nach Anspruch 1 oder 2, **dadurch gekennzeichnet, dass** zwischen die Spule (S; 9; 10; 16) und die zweite Strom- oder Spannungsquelle (21) ein weiteres kapazitives Element ($C_2$) geschaltet ist, wobei die Spule (S; 9; 10; 16) und das weitere kapazitive Element ($C_2$) eine zweite Impedanz Y ($Z_2$) bilden, und dass die Phasenverschiebung $\Phi$ zwischen dem zweiten Strom K ($I_2$) und der Spannung über der zweiten Impedanz Y ($Z_2$) als Kriterium zur Annahme oder Zurückweisung der Münze dient.

4. Einrichtung nach Anspruch 1 oder 2, **dadurch gekennzeichnet, dass** zwischen die Spule (S; 9; 10; 16) und die zweite Strom- oder Spannungsquelle (28) ein weiteres kapazitives Element ($C_2$) geschaltet ist, wobei die Spule (S; 9; 10; 16) und das weitere kapazitive Element ($C_2$) einen Serieresonanzkreis bilden, und dass die zweite Strom- oder Spannungsquelle (28) den Serieresonanzkreis in Resonanz betreibt.

5. Einrichtung nach einem der Ansprüche 1 bis 4, **dadurch gekennzeichnet, dass** auch der Betrag der Impedanz Z ($Z_1$) als Kriterium zur Annahme oder Zurückweisung der Münze dient.

6. Einrichtung nach einem der Ansprüche 1 bis 5, **dadurch gekennzeichnet, dass** die Frequenz des ersten Stromes J ($I_1$) im Bereich von 1 bis 10 kHz liegt.

7. Einrichtung nach einem der Ansprüche 1 bis 6, **dadurch gekennzeichnet, dass** die Frequenz des zweiten Stromes K ($I_2$; $I_3$) im Bereich von 50 kHz bis 5 MHz liegt.

8. Einrichtung nach einem der Ansprüche 1 bis 7, **dadurch gekennzeichnet, dass** das induktive Messelement gebildet ist durch die Spule (S; 9; 10), die auf der einen Seitenwand (4; 5) eines Münzkanals (1) angeordnet ist, und durch ein metallisches Plättchen (11; 12), das auf der gegenüberliegenden Seitenwand (5; 4) des Münzkanals (1) angeordnet ist.

9. Einrichtung nach einem der Ansprüche 1 bis 7, **dadurch gekennzeichnet, dass** die Spule des induktiven Messelementes eine Doppelspule (16) ist, die aus zwei auf der unteren und der oberen Seitenwand (4; 5) eines Münzkanals (1) angeordneten Einzelspulen (17; 18) besteht, die in gegenläufigem Sinn gewickelt und elektrisch in Reihe geschaltet sind.

10. Einrichtung nach Anspruch 9, **dadurch gekenn-**

**zeichnet, dass** die auf der unteren Seitenwand (4) angeordnete Einzelspule (17) mit niederohmigem Litzedraht gewickelt ist.

## Revendications

1. Dispositif pour tester l'authenticité de pièces de monnaie (M), jetons ou autres articles plats de métal, ayant un élément de mesure inductif avec une bobine (S; 9; 10; 11; 12; 16) pour caractériser la pièce de monnaie, où la bobine (S; 9; 10; 16) peut être alimentée d'un premier courant $(I_1)$ à une première fréquence $(f_1)$ d'une première source de courant de tension (19) et dans lequel un élément capacitif $(C_1)$ est connecté entre la bobine (S; 9; 10; 16) et la première source de courant de tension (19), la bobine et l'élément capacitif $(C_1)$ formant une impédance $Z_1$ et que le déphasage $(\varphi_1)$ entre le premier courant $I_1$ et la tension à travers l'impédance $Z_1$ sert de critère pour l'acceptation ou le rejet de la pièce de monnaie, **caractérisé en ce que**, pour la mesure d'autres paramètres $(\varphi_2, f_R, Rs, _{AC} (f_R))$ la bobine (S; 9; 10; 16) est alimentée d'un deuxième courant $(I_2, I_3)$ d'une deuxième source de courant de tension (21, 28) à haute fréquence (f2).

2. Dispositif selon la revendication 1, **caractérisé en ce que** l'élément capacitif $(C_1)$ est déterminé de telle sorte que le déphasage $\varphi$ a une valeur prédéterminée selon l'absence ou la présence d'une pièce de monnaie d'un type de pièce de monnaie prédéterminé.

3. Dispositif selon la revendication 1 ou 2, **caractérisé en ce que** un élément additionnel capacitif $(C_2)$ est connecté entre la bobine (S; 9; 10; 16) et la deuxième source de courant ou de tension (21), la bobine et l'élément additionnel capacitif $(C_2)$ formant une deuxième impédance Y $(Z_2)$ et que le déphasage $\varphi$ entre le deuxième courant K $(I_2)$ et la tension à travers la deuxième impédance Y $(Z_2)$ sert d'un critère pour l'acceptation ou le rejet de la pièce de monnaie.

4. Dispositif selon la revendication 1 ou 2, **caractérisé en ce que** un élément additionnel capacitif $(C_2)$ est connecté entre la bobine (S; 9; 10; 16) et la deuxième source de courant ou de tension (28), la bobine (S; 9; 10; 16) et l'élément additionnel capacitif $(C_2)$ formant un circuit de résonance série et **en ce que** la deuxième source de courant ou de tension (28) fait fonctionner le circuit de résonance série en résonance.

5. Dispositif selon l'une des revendications 1 à 4, **caractérisé en ce que** la valeur de l'impédance Z $(Z_1)$ sert aussi de critère pour l'acceptation ou le rejet de la pièce de monnaie.

6. Dispositif selon l'une des revendications 1 à 5, **caractérisé en ce que** la fréquence du premier courant J $(I_1)$ est dans la gamme de 1 à 10 kHz.

7. Dispositif selon l'une des revendications 1 à 6, **caractérisé en ce que** la fréquence du deuxième courant K $(I_2; I_3)$ est dans la gamme de 50 kHz à 5 MHz.

8. Dispositif selon l'une des revendications 1 à 7, **caractérisé en ce que** l'élément de mesure inductif est formé par la bobine (S; 9; 10) qui est arrangé sur une paroi latérale (4; 5) d'un passage de pièce de monnaie (1) et par un plat de métal (11; 12) arrangé sur la paroi opposée (5; 4) du passage de pièce de monnaie (1).

9. Dispositif selon l'une des revendications 1 à 7, **caractérisé en ce que** la bobine de l'élément de mesure inductif est une bobine double (16), comprenant deux bobines individuelles (17; 18) qui sont arrangées sur une partie basse et haute des parois latérales (4; 5) d'un passage de pièce de monnaie (1) et qui sont bobinées dans des directions opposées et connectées électriquement en série.

10. Dispositif selon la revendication 9, **caractérisé en ce que** la bobine individuelle (17) disposée sur la paroi latérale inférieure (4) est bobinée avec du fil de faible résistance.

## Claims

1. Device for testing the authenticity of coins (M), tokens or other flat metal articles, which has an inductive measuring element with a coil (S; 9; 10; 11; 12; 16) for characterizing the coin, wherein the coil (S; 9; 10; 16) can be fed with a first current $(I_1)$ of a first frequency $(f_1)$ from a first current or voltage source (19) and in which a capacitive element (C1) is connected between the coil (S; 9; 10; 16) and the first current or voltage source (19), the coil and the capacitive element $(C_1)$ forming an impedance $Z_1$, and that the phase shift $(\varphi_1)$ between the first current $I_1$ and the voltage across the impedance $Z_1$ serves as a criterion for acceptance or rejection of the coin is measured, **characterized in that**, the measure further parameters $(\varphi_2, f_R, R_{S,AC}(f_R))$ the coil (S; 9; 10; 16) can be fed with a second current $(I_2, I_3)$ from a second, high frequency $(f_2)$, current or voltage source (21, 28) of the device.

2. Device according to claim 1 **characterized in that** the capacitive element $(C_1)$ is of such a value that the phase shift $\varphi$ has a predetermined value in the absence or in the presence of a coin of a predetermined coin type.

3. Device according to claim 1 or 2, **characterized in that** a further capacitive element ($C_2$) is connected between the coil (S; 9; 10; 16) and the second current or voltage source (21), the coil and the further capacitive element ($C_2$) forming a second impedance Y ($Z_2$), and that the phase shift φ between the second current K ($I_2$) and the voltage across the second impedance Y ($Z_2$) serves as a criterion for acceptance or rejection of the coin.

4. Device according to claim 1 or 2, **characterized in that** a further capacitive element ($C_2$) is connected between the coil (S; 9; 10; 16) and the second current or voltage source (28), the coil (S; 9; 10; 16) and the further capacitive element ($C_2$) forming a series resonance circuit, and that the second current or voltage source (28) operates the series resonance circuit in resonance.

5. Device according to one of the claims 1 to 4, **characterized in that** the value of the impedance Z ($Z_1$) also serves as a criterion for acceptance or rejection of the coin.

6. Device according to one of the claims 1 to 5 **characterized in that** the frequency of the first current J ($I_1$) is in the range of 1 to 10 kHz.

7. Device according to one of the claims 1 to 6 **characterized in that** the frequency of the second current K ($I_2$; $I_3$) is in the range of 50 kHz to 5 MHz.

8. Device according to one of the claims 1 to 7 **characterized in that** the inductive measuring element is formed by the coil (S; 9; 10) which is arranged on the one side wall (4; 5) of a coin passage (1) and by a metal plate (11; 12) arranged on the oppositely disposed side wall (5; 4) of the coin passage (1).

9. Device according to one of the claims 1 to 7 **characterized in that** the coil of the inductive measuring element is a double coil (16), comprising two individual coils (17; 18) which are arranged on the lower and the upper side walls (4; 5) of a coin passage (1) and which are wound in opposite directions and electrically connected in series.

10. Device according to claim 9 **characterized in that** the individual coil (17) arranged on the lower side wall (4) is wound with low-resistance stranded wire.

EP 0 805 423 B1

Fig. 1

Fig. 2

8

Fig. 3

Fig. 4